# EUROPÄISCHE PATENTSCHRIFT

(11) **EP 3 902 714 B1**
(45) Veröffentlichungstag und Bekanntmachung des Hinweises auf die Patenterteilung: **29.03.2023**
(21) Anmeldenummer: 19832364.4
(22) Anmeldetag: 19.12.2019
(51) Int. Cl.: B60S 1/38

(54) **WISCHLEISTE**
WIPER BLADE
LAME D'ESSUIE-GLACE

(30) Priorität: 27.12.2018 DE 102018251714
(43) Veröffentlichungstag der Anmeldung: 03.11.2021
(73) Patentinhaber: Robert Bosch GmbH, 70442 Stuttgart (DE)
(72) Erfinder: ANGYAL, Adam, 3980 Satoraljaujhely (HU); BUBBA, Marcello, 3210 Linden (BE); VERELST, Hubert, 3300 Tienen (BE); TRUYENS, Stijn, 3300 Tienen (BE); DEAK, Peter, 1188 Budapest (HU)
(86) Internationale Anmeldenummer: PCT/EP2019/086341
(87) Internationale Veröffentlichungsnummer: WO 2020/136080

(56) Entgegenhaltungen:
- DE-A1- 19 745 003
- DE-A1-102012 215 641
- DE-A1-102012 222 510

## Beschreibung

### Stand der Technik

Die Erfindung betrifft eine Wischleiste nach der Gattung des unabhängigen Anspruchs.

Bei herkömmlichen, bekannten Wischleisten bzw. Gummiprofilen für Scheibenwischerblätter wird ein mechanisches Pendelprinzip genutzt, um die Orientierung der Wischlippe in jeder Umkehrposition zu drehen. Dabei entstehen große Aufschlagkräfte und Geräusche während der Wischbewegung beim Umkehren. Ursache dieses Geräusches ist, dass die Wischlippe sich aus einer Schräglage zunächst senkrecht aufrichtet und dann in einer Art Pendelbewegung umkippt. Dieses Umschlaggeräusch ("Flip-Over-Noise") entsteht vor allem dadurch, dass das gesamte Wischblatt mit Wischarm beim Umschlagen der Wischlippe in Richtung der Scheibe beschleunigt und dann schnell abgebremst wird. Dies erzeugt einen Schlag gegen die Scheibe und die entsprechende Geräuschentwicklung. Es wurde daher angestrebt, Wischlippen vorzuschlagen, die eine solche Umschlagbewegung nicht zeigen oder nur in verringertem Maß. Aus der DE 10 2008 043 283 A1 ist eine Wischleiste für eine Wischereinrichtung eines Fahrzeugs zum Wischen von Fahrzeugscheiben bekannt, bei der die Wischleiste einen Wischerabschnitt mit einem Hohlraum aufweist. Die Wände des Wischerabschnitts sind über eine Gelenkseinrichtung jeweils miteinander verbunden. Aus der WO 2015 032563 A1 ist eine Wischleiste für eine Scheibenwischervorrichtung bekannt, die ein Basisteil mit einer Ausnehmung zu der der Scheibe abgewandten Seite aufweist und bei der auf der der Scheibe zugewandten Seite gegenüber der Ausnehmung eine Wischkante angeordnet ist. Als weiterer Stand der Technik sind die DE 10 2012 215641 A1 und die DE 10 2012 222510 A1 bekannt geworden.

### OFFENBARUNG DER ERFINDUNG

Die Wischleiste mit den Merkmalen des Hauptanspruchs hat den Vorteil, dass im Querschnitt betrachtet in jedem der Schenkel ein Aktuatorabschnitt angeordnet ist, bei dem im Querschnitt zumindest ein Teil des Querschnitts, bevorzugt der gesamte Querschnitt, aus einem Funktionspolymer besteht. Funktionspolymere oder smarte Polymere können neben anderen Funktionen als Aktuatoren eingesetzt werden, die eine Kraft ausüben. Beispielsweise gibt es Funktionspolymere, die sich bei Anlegen einer Spannung oder durch Licht erfolgender Betätigung zusammenziehen. Vorteilhaft wird dadurch die Länge eines Schenkels bei der Betätigung des Aktuatorabschnitts verkürzt und dieser steifer. Bei Umkehr der Bewegungsrichtung eines Wischblatt mit der Wischleiste kann dadurch ein Umlegen der Wischlippe erreicht werden, das sanft und ohne Schlag auf die Scheibe erfolgt. Es entsteht kein störendes Geräusch bzw. nur ein zu vernachlässigend geringes. Dabei wird bei jeder Bewegungsumkehr die Betätigung der Aktuatorabschnitte gewechselt und während der Wischbewegung der jeweils in Bewegungsrichtung vorne liegende Aktuatorabschnitt angesteuert. Dies garantiert die erforderliche und stabile Orientierung der Wischlippe. Über die Schenkel erfolgt an deren Enden eine Verbindung zu Halteelementen, insbesondere einem Tragelement, beispielsweise einer Federschiene eines Wischblatt. Hierfür können auch spezielle Profile an den Schenkeln vorgesehen sein, die mit diesen Halteelementen oder dem Tragelement zusammenwirken.

Durch die in den Unteransprüchen aufgeführten Maßnahmen ergeben sich weiterhin vorteilhafte Weiterbildungen und Verbesserungen der in dem Hauptanspruch angegebenen Merkmale.

Erfindungsgemäß wird der Funktionspolymer durch Spannung und/oder Licht betätigt und werden auf der Oberseite der Aktuatorabschnitte Ansteuerelemente zur Erzeugung einer Spannung und/oder einer Lichtemission angeordnet sein. Dies ermöglicht vorteilhaft eine sehr kompakte Bauweise, bei der im freien Bereich oberhalb der Basis bzw. der Schenkel die Ansteuerelemente angeordnet sein können. Insbesondere kann eine Ansteuerung direkt elektrisch oder indirekt elektrisch über eine zwischengeschaltete Lichtemission erfolgen.

In einer vorteilhaften Ausgestaltung zieht der Funktionspolymer bei Betätigung sich zusammen.

Vorteilhaft bilden die Schenkel der Wischleiste ein U-förmiges Querschnittsprofil, sind insbesondere die von der Basis weg führenden Bereiche der Schenkel senkrecht zu einer Mittelebene der Wischlippe und in diesem Bereich die Aktuatorabschnitte angeordnet. Dadurch sind die Aktuatorabschnitte in einem zur Scheibe parallelen Bereich der Schenkel angeordnet und Zug- oder auch Schubkräfte des Aktuatorabschnitts wirken sich nur auf die Orientierung der Wischlippe aus, ohne senkrecht zur Scheibe orientierte Kraftkomponente. Vorteilhaft ist im Bereich der Aktuatorabschnitte die Querschnittsbreite der Schenkel reduziert. Dies ermöglicht eine größere Beweglichkeit an dieser Stelle und zugleich eine gute Einstellbarkeit der Wirkung des Funktionspolymers, der an dieser Position sich befindet. Die Größe der ausgeübten Kraft kann durch die Geometrie des Funktionspolymers definiert werden.

In einer vorteilhaften Ausgestaltung weist die Wischlippe eine Wischkante als Dreiecksspitze auf.

In einer alternativen, ebenfalls vorteilhaften Ausgestaltung weist die Wischlippe zwei Wischkanten als Ecken einer abgeschnittenen Dreiecksspitze auf.

Bei einem Verfahren zum Wischen einer Scheibe mit einem Wischblatt unter Verwendung einer zuvor beschriebenen Wischleiste wird der in Bewegungsrichtung vorne liegende Aktuatorabschnitt betätigt. Vorteilhaft ergibt sich dadurch eine sichere und stabile Orientierung der Wischlippe mit der Wischkante.

In einer vorteilhaften Ausgestaltung des Verfahrens erfolgt bei Umkehr der Bewegungsrichtung ein Wechsel der Betätigung der Aktuatorabschnitte. Dies ermöglicht ein sanftes und nahezu geräuschloses Umlegen der Wischlippe, ohne dass es zu einem Schlag auf die Scheibe kommt.

### Beschreibung der Zeichnungen

Ausführungsbeispiele der Erfindung sind in den Zeichnungen dargestellt und in der nachfolgenden Beschreibung näher erläutert. Es zeigen:
Fig. 1 ein erstes Ausführungsbeispiel einer Wischleiste im Querschnitt,
Fig. 2 die Wischleiste der Fig. 1 bei Bewegung nach links,
Fig. 3 die Wischleiste der Fig. 1 bei Bewegung nach rechts,
Fig. 4 ein zweites Ausführungsbeispiel einer Wischleiste im Querschnitt,
Fig. 5 ein drittes Ausführungsbeispiel einer Wischleiste im Querschnitt,
Fig. 6 ein Ausführungsbeispiel einer Spitze einer Wischlippe und
Fig. 7 ein weiteres Ausführungsbeispiel einer Spitze einer Wischlippe.

### Beschreibung der Ausführungsbeispiele

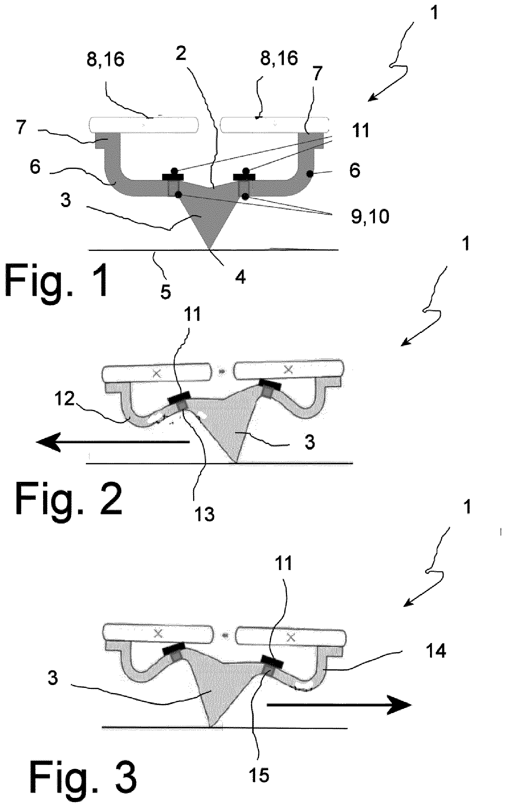

Die Fig. 1 zeigt ein erstes Ausführungsbeispiel einer Wischleiste 1 im Querschnitt. An einer Basis 2 ist eine Wischlippe 3 mit einer Wischkante 4 angeordnet, die an einer Scheibe 5 anliegt. Von der Basis 2 erstrecken sich zwei Schenkel 6, deren Enden 7 mit einem Tragelement 8 in Form einer zweiteiligen Federschiene 16 eines nicht weiter dargestellten Wischblatts verbunden sind. In jedem der Schenkel 6 ist ein Aktuatorabschnitt 9 angeordnet, dessen gesamter Querschnitt aus einem Funktionspolymer 10 besteht. Oberhalb jedes Aktuatorabschnitts 9 sind Ansteuerelemente 11 angeordnet, durch die das Funktionspolymer 10 beispielsweise durch Anlegen einer Spannung betätigt werden kann.

Die Schenkel 6 der Wischleiste 1 bilden ein U-förmiges Querschnittsprofil, bei dem die Aktuatorabschnitte 9 in einem Bereich der Schenkel 6 angeordnet sind, der bei nicht betätigten Aktuatorabschnitten 9 parallel zu der Scheibe 5 orientiert ist.

Die Fig. 2 zeigt die Wischleiste 1 der Fig. 1 bei Bewegung nach links, wie durch den Pfeil angedeutet. Ein in der Darstellung linker Schenkel 12 liegt in der Bewegungsrichtung vorne und ein linker Aktuatorabschnitt 13 ist durch das zugehörige Ansteuerelement 11 betätigt. Der linke Schenkel 12 verkürzt sich dadurch und versteift sich. Die Wischlippe 3 legt sich in Bezug auf die Bewegungsrichtung nach vorne und wird in dieser Position sicher und zuverlässig gehalten.

Die Fig. 3 zeigt die Wischleiste der Fig. 1 bei Bewegung nach rechts, wie durch den Pfeil angedeutet. Ein in der Darstellung rechter Schenkel 14 liegt in der Bewegungsrichtung vorne und ein rechter Aktuatorabschnitt 15 ist durch das zugehörige Ansteuerelement 11 betätigt. Der rechte Schenkel 14 verkürzt sich dadurch und versteift sich. Die Wischlippe 3 legt sich in Bezug auf die Bewegungsrichtung wiederum nach vorne, in dieser Darstellung in der Richtung entgegengesetzt zu derjenigen in der Fig. 2, und wird in dieser Position sicher und zuverlässig gehalten.

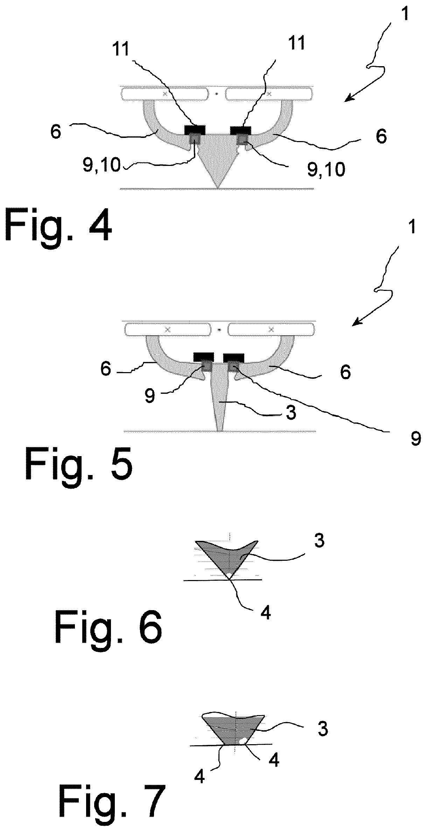

Die Fig. 4 zeigt ein zweites Ausführungsbeispiel einer Wischleiste 1 im Querschnitt. Elemente, die denjenigen des zuvor beschriebenen Ausführungsbeispiels entsprechen, sind mit denselben Bezugszeichen versehen. Bei sonst ähnlichem Aufbau ist die Form der Schenkel 6 mehr abgerundet und die Querschnittsbreite ist im Bereich der Aktuatorabschnitte 9 reduziert. Dadurch kann die in den Aktuatorabschnitten 9 durch den Funktionspolymer 10 bei Betätigung durch die Ansteuerelemente 11 ausgeübte Kraft nach Bedarf definiert werden.

Die Fig. 5 zeigt ein drittes Ausführungsbeispiel einer Wischleiste 1 im Querschnitt. Bei sonst ähnlichem Aufbau ist die Form der Schenkel 6 mehr abgerundet gegenüber derjenigen des Ausführungsbeispiels der Fig. 1, die Querschnittsbreite im Bereich der Aktuatorabschnitte 9 reduziert und die Form der Wischlippe 3 schmaler und höher als bei den zuvor beschriebenen Ausführungsbeispielen.

Fig. 6 ein Ausführungsbeispiel einer Spitze einer Wischlippe 3 mit einer Wischkante 4, die durch diese Spitze gebildet wird.

Die Fig. 7 zeigt ein weiteres Ausführungsbeispiel einer Spitze einer Wischlippe 3, die quer abgeschnitten ist und dadurch zwei Wischkanten 4 aufweist, von denen je nach Bewegungsrichtung eine zum Einsatz kommt.

## Patentansprüche

1. Wischleiste für ein Wischblatt zum Wischen von Scheiben (5), insbesondere von Kraftfahrzeugscheiben, mit einer Wischlippe (3), die an einer Basis (2) angeordnet ist, wobei von der Basis (2) zwei Schenkel (6) abgehen, an deren Ende eine Verbindung mit dem Wischblatt erfolgen kann, insbesondere durch mit Haltemitteln des Wischblatt zusammenwirkende Profile, und wobei die Wischleiste (1) aus gummielastischem Material besteht,
**dadurch gekennzeichnet,**
**dass** in jedem der Schenkel (6) ein Aktuatorabschnitt (9) angeordnet ist, bei dem im Querschnitt zumindest ein Teil des Querschnitts, bevorzugt der gesamte Querschnitt, aus einem Funktionspolymer (10) besteht und der Funktionspolymer (10) durch Spannung und/oder Licht betätigt wird und auf der Oberseite der Aktuatorabschnitte (9) Ansteuerelemente (11) zur Erzeugung einer Spannung und/oder einer Lichtemission angeordnet sind.

2. Wischleiste nach einem der vorhergehenden Ansprüche,
**dadurch gekennzeichnet,**
**dass** der Funktionspolymer (10) bei Betätigung sich zusammenzieht.

3. Wischleiste nach einem der vorhergehenden Ansprüche,
**dadurch gekennzeichnet,**
**dass** die Schenkel (6) der Wischleiste ein U-förmiges Querschnittsprofil bilden, insbesondere die von der Basis (2) weg führenden Bereiche der Schenkel (6) senkrecht zu einer Mittelebene der Wischlippe (1) sind und in diesem Bereich die Aktuatorabschnitte (9) angeordnet sind.

4. Wischleiste nach einem der vorhergehenden Ansprüche,
**dadurch gekennzeichnet,**
**dass** im Bereich der Aktuatorabschnitte (9) die Querschnittsbreite der Schenkel (6) reduziert ist.

5. Wischleiste nach einem der vorhergehenden Ansprüche,
**dadurch gekennzeichnet,**
**dass** die Wischlippe (3) eine Wischkante (4) als Dreiecksspitze aufweist.

6. Wischleiste nach einem der Ansprüche 1 bis 4,
**dadurch gekennzeichnet,**
**dass** die Wischlippe (3) zwei Wischkanten (4) als Ecken einer abgeschnittenen Dreiecksspitze aufweist.

7. Verfahren zum Wischen einer Scheibe mit einem Wischblatt unter Verwendung einer Wischleiste nach einem der vorhergehenden Ansprüche,
**dadurch gekennzeichnet,**
**dass** der in Bewegungsrichtung vorne liegende Aktuatorabschnitt (13,15) betätigt wird.

8. Verfahren nach Anspruch 7,
**dadurch gekennzeichnet,**
**dass** bei Umkehr der Bewegungsrichtung ein Wechsel der Betätigung der Aktuatorabschnitte (13,15) erfolgt.

## Claims

1. Wiper strip for a wiper blade for wiping windows (5), in particular motor vehicle windows, with a wiper lip (3) which is arranged on a base (2), wherein two limbs (6) emerge from the base (2), at the end of which limbs there can be a connection to the wiper blade, in particular by means of profiles interacting with holding means of the wiper blade, and wherein the wiper strip (1) is composed of rubber-elastic material,
**characterized**
**in that** an actuator portion (9) is arranged in each of the limbs (6), in which in cross section at least part of the cross section, preferably the entire cross section, is composed of a functional polymer (10) and the functional polymer (10) is actuated by voltage and/or light, and activation elements (11) for generating a voltage and/or a light emission are arranged on the upper side of the actuator portions (9) .

2. Wiper strip according to one of the preceding claims,
**characterized**
**in that** the functional polymer (10) contracts upon actuation.

3. Wiper strip according to either of the preceding claims,
**characterized**
**in that** the limbs (6) of the wiper strip form a U-shaped cross-sectional profile, in particular the regions of the limbs (6) leading away from the base (2) are perpendicular to a centre plane of the wiper lip (1) and the actuator portions (9) are arranged in this region.

4. Wiper strip according to one of the preceding claims,
**characterized**
**in that** the cross-sectional width of the limbs (6) is reduced in the region of the actuator portions (9) .

5. Wiper strip according to one of the preceding claims,
**characterized**
**in that** the wiper lip (3) has a wiper edge (4) in the form of a triangular tip.

6. Wiper strip according to one of Claims 1 to 4,
**characterized**
**in that** the wiper lip (3) has two wiper edges (4) in the form of corners of a truncated triangular tip.

7. Method for wiping a window with a wiper blade using a wiper strip according to one of the preceding claims,
**characterized**
**in that** the actuator portion (13, 15) located in front in the direction of movement is actuated.

8. Method according to Claim 7,
**characterized**
**in that**, when the direction of movement is reversed, there is a change in the actuation of the actuator portions (13, 15).

## Revendications

1. Lame d'essuyage destinée à un balai d'essuyage de vitres (5), notamment de vitres de véhicules automobiles, ladite lame d'essuyage comprenant une lèvre d'essuyage (3) qui est disposée sur une base (2), deux branches (6) dont l'extrémité peut être reliée au balai d'essuyage, notamment par des profilés coopérant avec des moyens de retenue du balai d'essuyage, s'étendant depuis la base (2) et la lame d'essuyage (1) comprenant un matériau caoutchouteux,
**caractérisée en ce que**
dans chacune des branches (6) est disposée une portion d'actionnement (9) dans laquelle, dans la section transversale, au moins une partie de la section transversale, de préférence la totalité de la section transversale, comprend un polymère fonctionnel (10) et le polymère fonctionnel (10) est sollicité par une tension et/ou par de la lumière et des éléments de commande (11) destinés à générer une tension et/ou une émission de lumière sont disposés du côté supérieur des portions d'actionnement (9).

2. Lame d'essuyage selon l'une des revendications précédentes,
**caractérisée en ce que**
le polymère fonctionnel (10) se contracte lorsqu'il est sollicité.

3. Lame d'essuyage selon l'une des revendications précédentes,
**caractérisée en ce que**
les branches (6) de la lame d'essuyage forment un profil en forme de U en coupe transversale, en particulier les zones des branches (6) s'éloignant de la base (2) sont perpendiculaires à un plan médian de la lèvre d'essuyage (1) et les portions d'actionnement (9) sont disposées dans cette zone.

4. Lame d'essuyage selon l'une des revendications précédentes,
**caractérisée en ce que**
dans la zone des portions d'actionnement (9), la largeur en coupe transversale des branches (6) est réduite.

5. Lame d'essuyage selon l'une des revendications précédentes,
**caractérisée en ce que**
la lèvre d'essuyage (3) comporte un bord d'essuyage (4) sous la forme d'un sommet de triangle.

6. Lame d'essuyage selon l'une des revendications 1 à 4,
**caractérisée en ce que**
la lèvre d'essuyage (3) comporte deux bords d'essuyage (4) sous la forme d'angles d'un sommet de triangle tronqué.

7. Procédé d'essuyage d'une vitre avec un balai d'essuyage utilisant une lame d'essuyage selon l'une des revendications précédentes,
**caractérisé en ce que**
la section d'actionnement (13, 15) située à l'avant dans la direction de déplacement est sollicitée.

8. Procédé selon la revendication 7,
**caractérisé en ce que**
un changement de la sollicitation des portions d'actionnement (13, 15) est effectué lors de l'inversion du sens de déplacement.
